# EUROPÄISCHE PATENTSCHRIFT

(11) **EP 1 307 274 B1**
(45) Veröffentlichungstag und Bekanntmachung des Hinweises auf die Patenterteilung: **16.03.2005**
(21) Anmeldenummer: 01969506.3
(22) Anmeldetag: 25.07.2001
(51) Int. Cl.: B01D 29/21, B01D 29/96, B01D 35/153, B01D 35/16

(54) **FLÜSSIGKEITSFILTER, INSBESONDERE FÜR SCHMIERÖL EINER BRENNKRAFTMASCHINE**
LIQUID FILTER, ESPECIALLY FOR LUBRICATING OIL OF A COMBUSTION ENGINE
FILTRE POUR LIQUIDE, EN PARTICULIER POUR HUILE DE LUBRIFICATION D'UN MOTEUR A COMBUSTION

(30) Priorität: 08.08.2000 DE 10038531
(43) Veröffentlichungstag der Anmeldung: 07.05.2003
(73) Patentinhaber: Mann + Hummel GmbH, 71638 Ludwigsburg (DE)
(72) Erfinder: JAINEK, Herbert, 74074 Heilbronn (DE)
(74) Vertreter: Voth, Gerhard, Dipl.-Ing.
(86) Internationale Anmeldenummer: PCT/EP2001/008589
(87) Internationale Veröffentlichungsnummer: WO 2002/011854

(56) Entgegenhaltungen:
- EP-A- 0 612 549
- EP-A- 0 848 978
- EP-A- 1 106 795
- DE-U- 29 610 290
- DE-U- 29 915 840
- DE-U- 29 921 543

## Beschreibung

### Stand der Technik

Die Erfindung betrifft einen Flüssigkeitsfilter nach dem Oberbegriff des Patentanspruches 1 oder 5.

Es ist aus der DE 43 03 695 ein Ölfilter für die Reinigung von Schmieröl bekannt, wobei auf das annähernd stehend angeordnete Filtergehäuse des Ölfilters für die Reinigung von Schmieröl ein Deckel aufgeschraubt ist, an welchem ein ringförmiger Filtereinsatz lösbar befestigt ist, der den äußeren Zuströmraum von dem inneren Abströmraum trennt. Im unteren Bereich des Filtergehäuses ist ein ventilartig wirkendes Glied vorgesehen, das bei jedem Wechsel des Filtereinsatzes selbsttätig geöffnet wird und der Ableitung im Filtergehäuse verbliebenen Öles über einen Ableitungskanal zu einem Ölsammelraum dient.

Mit dem Deckel ist eine Mittelstange verdrehbar und begrenzt axial verschiebbar verbunden. In ihrem deckelnahen Bereich weist die Mittelstange eine kolbenartige Verdickung auf, welche gegenüber dem Filtereinsatz abgedichtet ist und den Zuströmraum von dem Abströmraum trennt. Die Mittelstange weist in ihrem unteren Endberelch das ventilartig wirkende Glied auf, welches mit dem Ableitungskanal zusammen wirkt.

Nachteilig ist bei dieser Ausführung die Länge der Mittelstange, welche vom Deckel durch den Ölfilter bis zum Ableitungskanal im Boden des Filtergehäuses reicht. Beim Filterwechsel wird der Deckel von dem Filtergehäuse abgeschraubt und muss in axialer Richtung nach oben gezogen werden bis die Mittelstange aus dem Filtergehäuse entfernt ist. Hierzu ist eine erhebliche Wartungshöhe erforderlich. Nachdem der Deckel mit der Mittelstange und dem Filtereinsatz aus dem Filtergehäuse gezogen wurde, muss der verbrauchte Filtereinsatz aus dem Deckel entfernt werden. Hierzu muss der verschmutzte Filtereinsatz über die lange Mittelstange abgezogen und der neue Filtereinsatz wiederum auf die lange Mittelstange aufgefädelt werden, wobei die Mittelstange sich im Bereich ihrer Verschnappung mit dem Deckel winkelig zu dem Deckel bewegen kann. Weiterhin besteht die Gefahr, dass die lange Mittelstange oder ihre Dichtringe beim Filterwechsel beschädigt werden können.

Die Aufgabe der Erfindung besteht darin, die oben genannten Nachteile zu vermeiden.

Diese Aufgabe wird durch die Merkmale des Patentanspruches 1 und des Nebenanspruches 5 gelöst.

### Vorteile der Erfindung

Der erfindungsgemäße Flüssigkeitsfilter weist ein Filtergehäuse, ein Filterelement, einen Stützkörper für das Filterelement und ein Schiebeventil auf. Es dient der Reinigung einer Flüssigkeit wie z.B. Schmieröl einer Brennkraftmaschine, Wasser, oder Kraftstoff. Das Filtergehäuse verfügt über einen Gehäusekörper und einen Gehäusedeckel, wobei der Gehäusedeckel dichtend mit dem Gehäusekörper verbunden ist. Hierbei können Dichtmittel vorgesehen sein, welche zwischen den Gehäusedeckel und den Gehäusekörper eingebracht sind. Die Gehäuseteile (Gehäusedeckel und Gehäusekörper) sind lösbar miteinander verbunden, wobei das Verschrauben der Gehäuseteile miteinander eine vorteilhafte Variante darstellt. In dem Filtergehäuse, insbesondere in dem Gehäusekörper, ist ein Rohflüssigkeitszulauf, ein Reinflüssigkeitsablauf und ein druckloser Flüssigkeitsablauf angeordnet. Der Rohflüssigkeitszulauf ist durch das Filterelement dichtend von dem Reinflüssigkeitsablauf getrennt, wobei das Filterelement derart gestaltet ist, dass es einen Filterinnenraum aufweist. Der Filterinnenraum kann z.B. zylindrisch oder quaderförmig ausgebildet sein, wobei er über zwei, sich gegenüberliegende Öffnungen verfügt. In dem Filterinnenraum ist ein Stützkörper angeordnet, welcher das Filterelement, weiches von außen nach innen durchströmt ist, abstützt. Der Stützkörper kann z.B. fest mit dem Filterelement verbunden oder lose in das Filterelement eingeführt sein.

Der Flüssigkeitsablauf ist von einem Schiebeventil, welches über ein Zwischenglied wie z.B. ein Verbindungsstück oder den Stützkörper korrespondierend mit dem Gehäusedeckel verbunden ist, verschlossen. Sobald das Filterelement ausgetauscht werden muss, wird der Gehäusedeckel von dem Gehäusekörper abgehoben, wodurch das Schiebeventil axial bewegt wird und den drucklosen Flüssigkeitsablauf frei gibt. Durch den Flüssigkeitsablauf kann die, sich in dem Flüssigkeitsfilter reinseitig befindliche Flüssigkeit ablaufen. Weiterhin kann der Flüssigkeitsablauf mit dem Rohflüssigkeitszulauf korrespondierend verbunden sein, wobei diese Verbindung vorteilhafterweise ebenfalls durch das Schiebeventil verbunden oder getrennt werden kann. Somit kann bei einer vorteilhaften Ausgestaltung des Flüssigkeitsfilters erst die Rohflüssigkeit in den Flüssigkeitsablauf ablaufen, bevor die Reinflüssigkeit in den Flüssigkeitsablauf gelangt, wodurch auch beim Filterwechsel keine Rohflüssigkeit auf die Reinseite gelangt und sich somit keine Schmutzpartikel auf der Reinseite ablagern können.

Das Schiebeventil kann bei einer ersten Variante mit dem Stützkörper, welcher mit dem Gehäusedeckel korrespondierend verbunden und in das Filterelement eingeführt ist, lösbar verbunden sein. Hierbei kann der Stützkörper z.B. mit dem Gehäusedeckel lösbar oder unlösbar verbunden sein, wobei bei einer lösbaren Verbindung zwischen dem Gehäusedeckel und dem Stützkörper diese Verbindung größere Axialkräfte aufnehmen können muss, als die lösbare Verbindung zwischen dem Stützkörper und dem Schiebeventil.

Bei einer zweiten Variante ist das Schiebeventil mit einem Verbindungsstück lösbar verbunden, wobei das Verbindungsstück mit dem Gehäusedeckel lösbar oder unlösbar verbunden sein kann. Hierbei ist die lösbare Verbindung zwischen dem Verbindungsstück und dem Gehäusedeckel entsprechend der Verbindung zwischen dem Gehäusedeckel und dem Stützkörper der ersten Variante zu gestalten.

Durch die Verbindung des Schiebeventils mit dem Stützkörper bzw. dem Verbindungsstück ist die Baugruppe aus dem Gehäusedeckel, dem Schiebeventil und dem Stützkörper bzw. dem Verbindungsstück teilbar, wodurch der zur Wartung erforderliche Raum niedriger sein kann. Dies ist z.B. bei Kraftfahrzeugen vorteilhaft, da somit der Flüssigkeitsfilter auch an Stellen, welche schlechter zugänglich sind angeordnet werden kann.

Die EP-A-1106795, veröffentlicht am 13.06.2001, offenbart Flüssigkeitsfilter, die den erfindungsgemäßen Filter ähnlich sind. In der EP-A-1106795 ist das Schiebeventil jedoch weder am Stützkörper des Filterelementes, noch an einem Verbindungsstück, das am Gehäusedeckel verbunden ist, verbunden.

Das Schiebeventil ist axial verschiebbar mit dem Gehäusekörper verbunden. Hierbei verbleibt das Schiebeventil bei einem Wechsel des Filterelementes in dem Gehäusekörper. Die Verbindung zwischen dem Schiebeventil und dem Stützkörper bzw. Verbindungsstück wird gelöst, wodurch der Gehäusedeckel mit dem Stützkörper bzw. dem Verbindungsstück eine relativ kurze Baueinheit bilden, welche in einem kleinen Raum von dem Gehäusekörper getrennt werden kann. Das Schiebeventil kann z.B. in dem Gehäusekörper verrastet sein, wodurch es einfach montiert, jedoch nach der Montage nicht wieder zerstörungsfrei entfernt werden kann. Alle Bestandteile des Schiebeventils, wie z-B. Schnappverbindung, Dichtflächen oder Dichtringe sind als Lebensdauerbauteile ausgelegt, so dass keine Wartung erforderlich ist. Dadurch können Beschädigungen z. B. an den Dichtflächen des Schiebeventils vermieden werden.

Eine zweckmäßige Ausgestaltung der Verbindung zwischen dem Schiebeventil und dem Stützkörper bzw. dem Verbindungsstück ist eine Schnappverbindung, welche beliebig oft erzeugbar ist. Weiterhin ist eine Schnappverbindung eine einfach und schnell zu erzeugende Verbindung, welche auch einfach und schnell wieder getrennt werden kann.

Eine besondere Ausführungsform der Schnappverbindung stellt hierbei ein Kugelkopf dar, welcher in sein Gegenstück eingeschnappt wird. Hierbei kann der Kugelkopf sowohl an dem Schiebeventil als auch an dem Stützkörper bzw. Verbindungsstück angeordnet sein. Diese Ausführung hat den Vorteil, dass sich die Schnappverbindung selbst zentriert und bei der Montage in jeder Stellung des Schiebeventils zu dem Stützkörper bzw. Verbindungsstück einschnappen kann.

Es ist vorteilhaft, dass das Schiebeventil über einen Zentrierbereich verfügt, welcher in dem Gehäusekörper geführt ist. Dadurch kann sich das Schiebeventil nicht verkanten und einen Leckstrom verursachen. Weiterhin verbleibt das Schiebeventil nach der Trennung von dem Stützkörper bzw. Verbindungsstück in seiner Stellung, wodurch diese Verbindung wieder einfach erzeugt werden kann. Der Zentrierbereich kann z.B. durch drei Rippen gebildet werden, welche sich an dem Gehäusekörper abstützen und das Abfließen der Flüssigkeit in den Flüssigkeitsablauf nicht beeinträchtigen. Weiterhin kann der Zentrierbereich auch als perforierte Scheibe ausgebildet sein, welche ebenfalls für die Flüssigkeit durchlässig ist.

Bei einer zweckmäßigen Ausgestaltung der Erfindung ist der Zentrierbereich derart in dem Gehäusekörper geführt, dass das Schiebeventil bei Filterwechsel durch eine Klemmkraft gehalten ist. Dadurch verbleibt das Schiebeventil in seiner ausgerückten Endlage, in welcher die Flüssigkeit abfließen kann.

Gemäß einer weiteren Ausgestaltung der Erfindung weist das Schiebeventil zwei Dichtbereiche auf, wobei die Reinseite durch den ersten Dichtbereich und der Rohflüssigkeitszulauf durch den zweiten Dichtbereich von dem Flüssigkeitsablauf getrennt ist. Hierbei ist es vorteilhaft, wenn beim Öffnen des Flüssigkeitsfilters zuerst der zweite Dichtbereich die Rohseite zu dem Flüssigkeitsablauf frei gibt, damit zuerst die verschmutzte Flüssigkeit ablaufen kann. Beim weiteren Öffnen des Flüssigkeitsfilters wird das Schiebeventil weiter verschoben, so dass auch die Reinflüssigkeit in den Flüssigkeitsablauf abfließen kann. Dadurch kann nahezu die ganze Flüssigkeit aus dem Flüssigkeitsfilter ablaufen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: einen Flüssigkeitsfilter im Teilschnitt,
- Figur 2: einen Ausschnitt aus dem Flüssigkeitsfilter gemäß Figur 1,
- Figur 3: einen Ausschnitt aus dem Flüssigkeitsfilter gemäß Figur 1,
- Figur 4: einen Ausschnitt aus dem Flüssigkeitsfilter gemäß Figur 1 und
- Figur 5: einen Flüssigkeitsfilter im Teilschnitt.

### Beschreibung der Ausführungsbeispiele

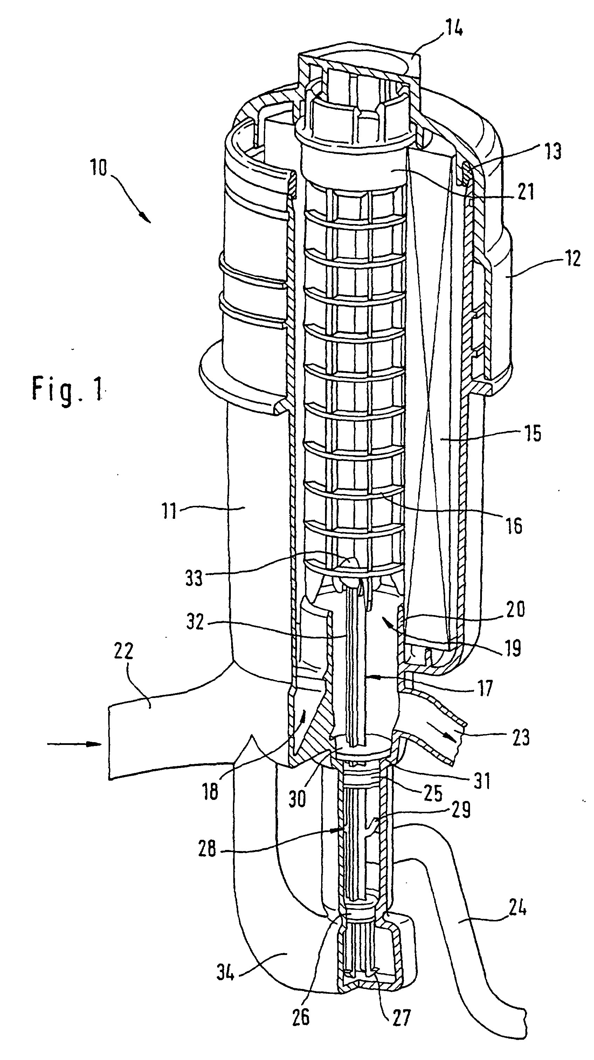

In Figur 1 ist ein Flüssigkeitsfilter im Teilschnitt dargestellt. Der Flüssigkeitsfilter weist ein Filtergehäuse 10 auf, welches durch einen Gehäusekörper 11 und einen Gehäusedeckel 12 gebildet wird. Der Gehäusedeckel 12 ist dichtend mit dem Gehäusekörper 11 verschraubt, wobei ein Dichtmittel 13 zwischen dem Gehäusekörper 11 und dem Gehäusedeckel 12 angeordnet ist. Der Gehäusedeckel 12 verfügt außenseitig über einen Sechskant 14, mit welchem der Gehäusedeckel 12 fest auf den Gehäusekörper 11 geschraubt werden kann. In dem Filtergehäuse 10 sind ein Filterelement 15, ein Stützkörper 16 und ein Schiebeventil 17 angeordnet. Das Filterelement 15 ist derart in das Filtergehäuse 10 eingebracht, dass eine Rohseite 18 dichtend von einer Reinseite 19 getrennt ist. Hierzu stützt sich das hohlzylindrisch ausgebildete Filterelement 15 einerseits an einem Rohransatz 20 in dem Gehäusekörper 11 und andererseits an einem Dichtansatz 21 des Stützkörpers 16 ab. Der Stützkörper 16 ist für die zu reinigende Flüssigkeit durchlässig, was bei diesem Ausführungsbeispiel durch ein Gitter erreicht wird. In dem Stützkörper 16 kann z. B. ein Umgehungsventil angeordnet sein, welches bei einem zu großen Druckanstieg im Flüssigkeitsfilter die Rohseite 18 mit der Reinseite 19 kurzschließt.

Der Gehäusekörper 11 weist einen Rohflüssigkeitszulauf 22 auf, welcher mit der Rohseite 18 verbunden ist. Weiterhin verfügt der Gehäusekörper 11 über einen Reinflüssigkeitsablauf 23, durch welchen gereinigte Flüssigkeit aus der Reinseite 19 abfließen kann.

Das Schiebeventil 17 ist derart in den Gehäusekörper 11 eingebracht, dass es in seiner ersten Endstellung einen Flüssigkeitsablauf 24, welcher in den Gehäusekörper 11 integriert ist, verschließt. Hierbei weist das Schiebeventil 17 einen ersten Dichtbereich 25 auf, welcher die Reinseite 19 dichtend von dem Flüssigkeitsablauf 24 trennt. Ein zweiter Dichtbereich 26 trennt die Rohseite 18, welche über eine Verbindungsleitung 34 mit dem Flüssigkeitsablauf 24 verbunden ist, dichtend von dem Flüssigkeitsablauf 24. Damit das Schiebeventil 17 nicht aus dem Gehäusekörper 11 entfernt wird, ist eine Rastung 27 im unteren Bereich des Schiebeventils 17 angeordnet, welche bei der Erstmontage in den Gehäusekörper 11 eingerastet wird und dann in dem Gehäusekörper 11 verbleibt. Die Rastung 27 ermöglicht dem Schiebeventil 17 eine axiale Bewegung innerhalb des Gehäusekörpers 11. Um ein Verkanten des Schiebeventils 17 zu verhindern ist ein Zentrierbereich 28 mit Zentrierrippen 29 vorgesehen, welche in dem Gehäusekörper 11 geführt sind. Das Schiebeventil 17 weist eine Schulter 30 auf, welche auf einer Anlagefläche 31 aufliegt und so die erste Endstellung begrenzt. Die einzelnen Komponenten 27, 29, 30 des Schiebeventiles 17 sind durch eine Stange 32, welche bei diesem Ausführungsbeispiel einen kreuzförmigen Querschnitt aufweist, verbunden. Die Stange 32 weist an ihrem oberen Ende einen Kugelkopf 33 auf, welcher mit dem Stützkörper 16 zentrisch verschnappt ist.

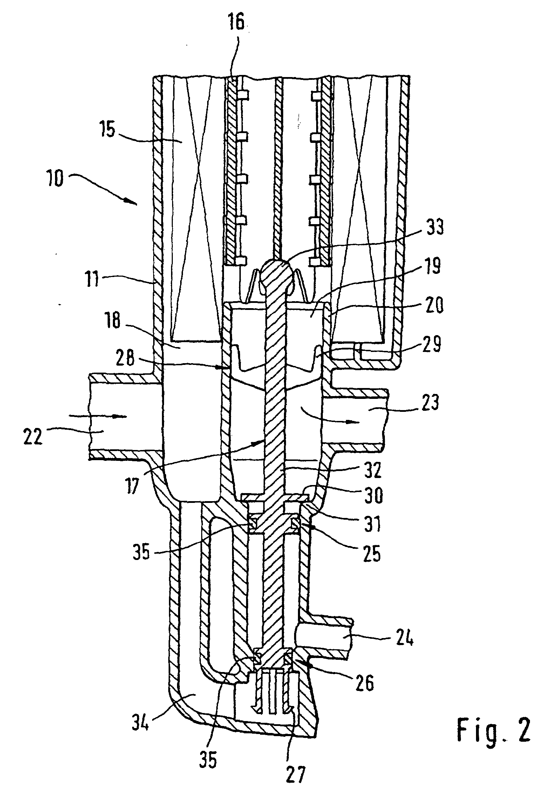

In Figur 2 ist ein Ausschnitt aus dem Flüssigkeitsfilter gemäß Figur 1 dargestellt. Der Figur 1 entsprechende Bauteile sind mit gleichen Bezugszeichen versehen. Bei diesem Ausschnitt steht das Schiebeventil 17 in der ersten Endstellung, wobei die Rohflüssigkeit in Pfeilrichtung in den Flüssigkeitsfilter eintritt, durch das Filterelement 15 gereinigt wird und durch den Reinflüssigkeitsablauf 23 wieder austritt. Hierbei ist der Flüssigkeitsablauf 24 von dem ersten und dem zweiten Dichtbereich 25, 26 sowohl für die Reinflüssigkeit als auch für die Rohflüssigkeit verschlossen. Die Dichtbereiche 25, 26 weisen jeweils eine Dichtung 35 auf, welche den Dichtbereich 25 bzw. 26 umschließt.

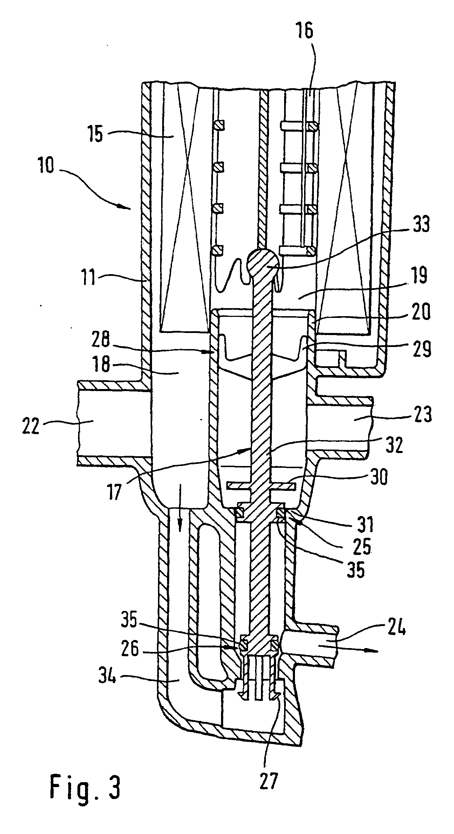

In Figur 3 ist ein Ausschnitt aus dem Flüssigkeitsfilter gemäß Figur 1 dargestellt. Der Figur 2 entsprechende Bauteile sind mit gleichen Bezugszeichen versehen. Bei dieser Darstellung befindet sich das Schiebeventil 17 in einer Mittelstellung, welche durch ein teilweises Öffnen des Gehäusedeckels 12 (gemäß Figur 1) erzeugt ist. In dieser Stellung dichtet das Schiebeventil 17 nur noch mit dem ersten Dichtbereich 25 die Reinseite 19 von dem Flüssigkeitsablauf 24 ab. Der zweite Dichtbereich 26 dichtet nicht mehr, wodurch Rohflüssigkeit von der Rohseite 18 in den Flüssigkeitsablauf 24 fließen kann. Dadurch entleert sich der Flüssigkeitsfilter, bevor das Filterelement 15 vollständig entfernt wird und somit die Rohseite 18 nicht mehr von der Reinseite 19 getrennt ist.

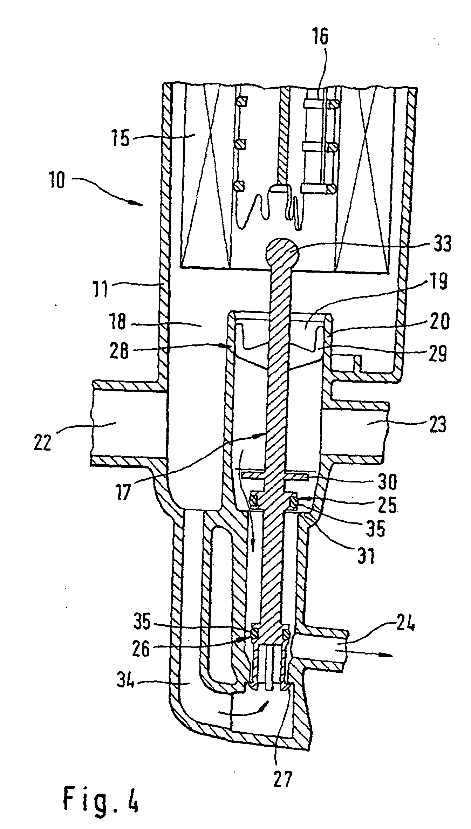

In Figur 4 ist ein Ausschnitt aus dem Flüssigkeitsfilter gemäß Figur 1 dargestellt. Der Figur 2 entsprechende Bauteile sind mit gleichen Bezugszeichen versehen. Bei diesem Ausschnitt ist das Schiebeventil 17 aus dem Stützkörper 16 ausgeschnappt und befindet sich somit in seiner zweiten Endstellung. Hierbei hat die Rastung 27 ein weiteres Herausziehen des Schiebeventiles 17 aus dem Gehäusekörper 11 verhindert. In dieser Stellung dichtet der erste Dichtbereich 25 nicht mehr die Reinseite 19 von dem Flüssigkeitsablauf 24 ab, wodurch die In dem Rohransatz 20 gestaute Flüssigkeit drucklos in den Flüssigkeitsauslass 24 abfließen kann. Der Zentrierbereich 28 stützt das Schiebeventil 17 ab, damit es sich nicht verkanten kann. Weiterhin klemmt der Zentrierbereich 28 in Verbindung mit dem Rohransatz 20 das Schiebeventil 17 fest, damit es durch seine Gewichtskraft nicht in die erste Endstellung nach unten fällt.

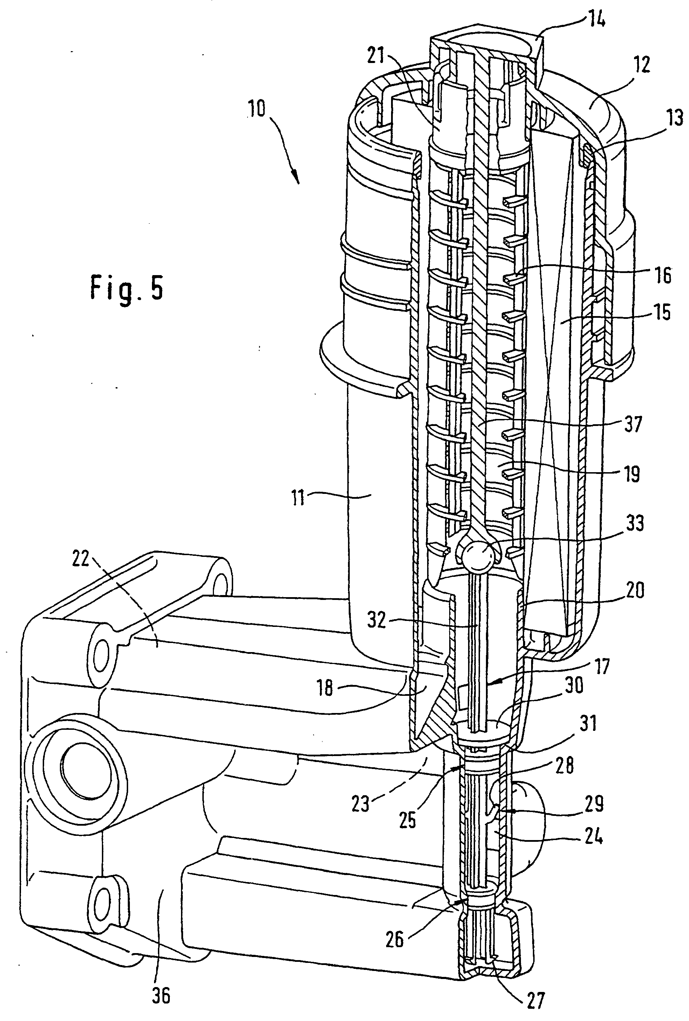

In Figur 5 ist ein Flüssigkeitsfilter in einer Variante im Teilschnitt dargestellt. Der Figur 1 entsprechende Bauteile sind mit gleichen Bezugszeichen versehen. Bei diesem Ausführungsbeispiel sind die Zu- und Abläufe 22, 23, 24 in einen Sockel 36 integriert, welcher an ein anschließendes Bauteil angeflanscht werden kann. Ein weiterer Unterschied zu Figur 1 besteht darin, dass das Schiebeventil 17 nicht mit dem Stützkörper 16 verschnappt ist, sondern mittels eines Verbindungsstückes 37 mit dem Gehäusedeckel 12 korrespondierend verbunden ist. Das Verbindungsstück 37 ist bei dieser Ausführung einteilig mit dem Gehäusedeckel 12 ausgeführt, wobei jedoch auch zweiteilige Ausführungen denkbar sind.

## Patentansprüche

1. Flüssigkeitsfilter, insbesondere für Schmieröl einer Brennkraftmaschine, aufweisend ein Filtergehäuse (10), ein Filterelement (15), einen Stützkörper (16) und ein Schiebeventil (17),
- wobei das Filtergehäuse (10) über einen Rohflüssigkeitszulauf (22), einen Reinflüssigkeitsablauf (23) und einen Flüssigkeitsablauf (24) verfügt,
- wobei das Filtergehäuse (10) einen Gehäusekörper (11) und einen Gehäusedeckel (12) aufweist, welche lösbar und dichtend miteinander verbunden sind,
- wobei das Filterelement (15) derart in das Filtergehäuse (10) eingebracht ist, dass eine Rohseite (18) dichtend von einer Reinseite (19) getrennt ist,
- wobei das Filterelement (15) einen Filterinnenraum umschließt, in welchem der Stützkörper (16) angeordnet ist,
- wobei der Flüssigkeitsablauf (24) von dem Schiebeventil (17) öffenbar verschlossen ist,
- das Schiebeventil (17) lösbar mit dem Stützkörper (16) verbunden ist,
wobei der Stützkörper (16) mit dem Gehäusedeckel (12) korrespondierend verbunden ist, wobei
das Schiebeventil (17) axial verschiebbar mit dem Gehäusekörper (11) verbunden, insbesondere verrastet ist, wobei das Schiebeventil (17) nicht zerstörungsfrei aus dem Gehäusekörper (11) entfembar ist und bei einem Wechsel des Filterelementes (15) die Verbindung zwischen dem Stützkörper (16) und dem Schiebeventil (17) gelöst wird und das Schiebeventil (17) in dem Gehäusekörper (11) verbleibt.

2. Flüssigkeitsfilter nach Anspruch 1, **dadurch gekennzeichnet, dass** das Schiebeventil (17) mit einer Schnappverbindung mit dem Stützkörper (16) verbunden ist.

3. Flüssigkeitsfilter nach Anspruch 1 oder 2, **dadurch gekennzeichnet, dass** der Stützkörper (16) mit dem Gehäusedeckel (12) lösbar oder unlösbar verbunden ist.

4. Flüssigkeitsfilter nach einem der vorangehenden Ansprüche, **dadurch gekennzeichnet, dass** das Schiebeventil (17) über einen Kugelkopf (33) verfügt, welcher mit dem Stützkörper (16) axial verschnappt ist.

5. Flüssigkeitsfilter, insbesondere für Schmieröl einer Brennkraftmaschine, aufweisend ein Filtergehäuse (10), ein Filterelement (15), einen Stützkörper (16) und ein Schiebeventil (17),
- wobei das Filtergehäuse (10) über einen Rohflüssigkeitszulauf (22), einen Reinflüssigkeitsablauf (23) und einen Flüssigkeitsablauf (24) verfügt,
- wobei das Filtergehäuse (10) einen Gehäusekörper (11) und einen Gehäusedeckel (12) aufweist, welche lösbar und dichtend miteinander verbunden sind,
- wobei das Filterelement (15) derart in das Filtergehäuse (10) eingebracht ist, dass eine Rohseite (18) dichtend von einer Reinseite (19) getrennt ist,
- wobei das Filterelement (15) einen Filterinnenraum umschließt, in welchem der Stützkörper (16) angeordnet ist,
- wobei der Flüssigkeitsablauf (24) von dem Schiebeventil (17) öffenbar verschlossen ist,
- das Schiebeventil (17) lösbar mit einem Verbindungsstück (37) verbunden ist, wobei das Verbindungsstück (37) korrespondierend mit dem Gehäusedeckel (12) verbunden ist,
wobei
das Schiebeventil (17) axial verschiebbar mit dem Gehäusekörper (11) verbunden, insbesondere verrastet ist, wobei das Schiebeventil (17) ) nicht zerstörungsfrei aus dem Gehäusekörper (11) entfernbar ist und bei einem Wechsel des Filterelementes (15) die Verbindung zwischen dem Verbindungsstück (37) und dem Schiebeventil (17) gelöst wird und das Schiebeventil (17) in dem Gehäusekörper (11) verbleibt.

6. Flüssigkeitsfilter nach Anspruch 5, **dadurch gekennzeichnet, dass** das Schiebeventil (17) mit einer Schnappverbindung mit dem Verbindungsstück (37) verbunden ist.

7. Flüssigkeitsfilter nach Anspruch 6, **dadurch gekennzeichnet, dass** das Schiebeventil über einen Kugelkopf verfügt, welcher mit dem Verbindungsstück (37) axial verschnappt ist.

8. Flüssigkeitsfilter nach einem der vorangehenden Ansprüche, **dadurch gekennzeichnet, dass** das Schiebeventil (17) über einen Zentrierbereich (28) verfügt, welcher in dem Gehäusekörper (11) geführt ist.

9. Flüssigkeitsfilter nach Anspruch 8, **dadurch gekennzeichnet, dass** der Zentrierbereich (28) derart in dem Gehäusekörper (11) geführt ist, dass das Schiebeventil (17) beim Filterwechsel durch eine Klemmkraft gehalten ist.

10. Flüssigkeitsfilter nach einem der vorangehenden Ansprüche, **dadurch gekennzeichnet, dass** das Schiebeventil (17) zwei Dichtbereiche (25), (26) aufweist, wobei die Reinseite (19) durch den ersten Dichtbereich (25) und der Rohflüssigkeitszulauf (22) durch den zweiten Dichtbereich (26) von dem Flüssigkeitsablauf (24) getrennt ist.

## Claims

1. Liquid filter, more especially for lubricating oil of an internal combustion engine, said filter including a filter housing (10), a filter element (15), a support body (16) and a slide valve (17),
- wherein the filter housing (10) has an unfiltered liquid inlet (22), a filtered liquid outlet (23) and a liquid outlet (24),
- wherein the filter housing (10) includes a housing body (11) and a housing cover (12), which are detachably interconnected in a sealing manner,
- wherein the filter element (15) is inserted into the filter housing (10) in such a manner that an unfiltered side (18) is separated in a sealing manner from a filtered side (19),
- wherein the filter element (15) surrounds a filter interior, in which the support body (16) is disposed,
- wherein the liquid outlet (24) is closed in an openable manner by the slide valve (17),
- the slide valve (17) is detachably connected to the support body (16), wherein the support body (16) is connected in a corresponding manner to the housing cover (12),
- wherein the slide valve (17) is connected, more especially fitted, to the housing body (11) so as to be axially displaceable, wherein it is not possible to remove the slide valve (17) out of the housing body (11) in a non-destructive manner and, when the filter element (15) is changed, the connection between the support body (16) and the slide valve (17) is released and the slide valve (17) remains in the housing body (11).

2. Liquid filter according to claim 1, **characterised in that** the slide valve (17) is connected to the support body (16) by a snap-type connection.

3. Liquid filter according to claim 1 or 2, **characterised in that** the support body (16) is connected to the housing cover (12) so as to be detachable or non-detachable.

4. Liquid filter according to one of the preceding claims, **characterised in that** the slide valve (17) has a ball head (33), which is snap-connected to the support body (16) in an axial manner.

5. Liquid filter, more especially for lubricating oil of an internal combustion engine, including a filter housing (10), a filter element (15), a support body (16) and a slide valve (17),
- wherein the filter housing (10) has an unfiltered liquid inlet (22), a filtered liquid outlet (23) and a liquid outlet (24),
- wherein the filter housing (10) includes a housing body (11) and a housing cover (12), which are detachably interconnected in a sealing manner,
- wherein the filter element (15) is inserted into the filter housing (10) in such a manner that an unfiltered side (18) is separated in a sealing manner from a filtered side (19),
- wherein the filter element (15) surrounds a filter interior, in which the support body (16) is disposed,
- wherein the liquid outlet (24) is closed in an openable manner by the slide valve (17),
- the slide valve (17) is connected in a detachable manner to a connecting element (37), wherein the connecting element (37) is connected in a corresponding manner to the housing cover (12),
- wherein the slide valve (17) is connected, more especially fitted, to the housing body (11) so as to be axially displaceable, wherein it is not possible to remove the slide valve (17) out of the housing body (11) in a non-destructive manner and, when the filter element (15) is changed, the connection between the connecting element (37) and the slide valve (17) is released and the slide valve (17) remains in the housing body (11).

6. Liquid filter according to claim 5, **characterised in that** the slide valve (17) is connected to the connecting element (37) by a snap-type connection.

7. Liquid filter according to claim 6, **characterised in that** the slide valve has a ball head, which is snap-connected to the connecting element (37) in an axial manner.

8. Liquid filter according to one of the preceding claims, **characterised in that** the slide valve (17) has a centring region (28), which is guided in the housing body (11).

9. Liquid filter according to claim 8, **characterised in that** the centring region (28) is guided in the housing body (11) in such a manner that the slide valve (17) is retained by means of a clamping force when the filter is changed.

10. Liquid filter according to one of the preceding claims, **characterised in that** the slide valve (17) includes two sealing regions (25), (26), the filtered side (19) being separated from the liquid outlet (24) by means of the first sealing region (25) and the unfiltered liquid inlet (22) being separated from the liquid outlet (24) by means of the second sealing region (26).

## Revendications

1. Filtre pour liquide, en particulier pour huile de lubrification d'un moteur à combustion, présentant un boîtier de filtre (10), un élément filtrant (15), un corps de support (16) et une soupape à coulisse (17), dans lequel
- le boîtier de filtre (10) possède une admission de liquide brut (22), une évacuation de liquide épuré (23) et une évacuation de liquide (24),
- le boîtier de filtre (10) possède un corps de boîtier (11) et un couvercle de boîtier (12) qui sont reliés entre eux de manière amovible et étanche,
- l'élément filtrant (15) est inséré dans le boîtier de filtre (10) de telle sorte qu'un côté brut (18) est séparé de manière étanche d'un côté épuré (19),
- l'élément de filtrant (15) entoure une chambre intérieure de filtre logeant le corps de support (16),
- l'évacuation de liquide (24) est fermée de manière ouvrable par la soupape à coulisse (17),
- la soupape à coulisse (17) est reliée de manière amovible avec le corps de support (16),
- le corps de support (16) est relié avec le couvercle de boîtier (12), et
dans lequel
- la soupape à coulisse (17) est reliée, en particulier enclenchée, de manière coulissante axialement avec le corps de boîtier (11), la soupape à coulisse (17) ne pouvant pas être séparée sans dommages du corps de boîtier (11), et lors du remplacement de l'élément filtrant (15) on libère la liaison entre le corps de support (16) et la soupape à coulisse (17), et la soupape à coulisse (17) reste dans le corps de boîtier (11)

2. Filtre pour liquide selon la revendication 1,
**caractérisé en ce que**
la soupape à coulisse (17) est reliée par une connexion à enclenchement avec le corps de support (16).

3. Filtre pour liquide selon la revendication 1 ou 2,
**caractérisé en ce que**
le corps de support (16) est relié de manière amovible ou non amovible avec le couvercle de boîtier (12).

4. Filtre pour liquide selon une des revendications précédentes,
**caractérisé en ce que**
la soupape à coulisse (17) possède une tête sphérique (33) qui est enclenchée axialement avec le corps de support (16).

5. Filtre pour liquide, en particulier pour huile de lubrification d'un moteur à combustion, présentant un boîtier de filtre (10), un élément filtrant (15), un corps de support (16) et une soupape à coulisse (17), dans lequel
- le boîtier de filtre (10) possède une admission de liquide brut (22), une évacuation de liquide épuré (23) et une évacuation de liquide (24),
- le boîtier de filtre (10) possède un corps de boîtier (11) et un couvercle de boîtier (12) qui sont reliés entre eux de manière amovible et étanche,
- l'élément filtrant (15) est inséré dans le boîtier de filtre (10) de telle sorte qu'un côté brut (18) est séparé de manière étanche d'un côté épuré (19),
- l'élément de filtrant (15) entoure une chambre intérieure de filtre logeant le corps de support (16),
- l'évacuation de liquide (24) est fermée de manière ouvrable par la soupape à coulisse (17),
- la soupape à coulisse (17) est reliée de manière amovible avec une pièce de raccord (37), la pièce de raccord (37) étant reliée avec le couvercle de boîtier (12), et
dans lequel
- la soupape à coulisse (17) est reliée de manière coulissante axialement avec le corps de boîtier (11), la soupape à coulisse (17) ne pouvant pas être séparée sans dommages du corps de boîtier (11), et lors du remplacement de l'élément filtrant (15) on libère la liaison entre la pièce de raccord (37) et la soupape à coulisse (17), et la soupape à coulisse (17) reste dans le corps de boîtier (11).

6. Filtre pour liquide selon la revendication 5,
**caractérisé en ce que**
la soupape à coulisse (17) est reliée par une connexion à enclenchement avec la pièce de raccord (37).

7. Filtre pour liquide selon la revendication 6,
**caractérisé en ce que**
la soupape à coulisse possède une tête sphérique qui est enclenchée axialement avec la pièce de raccord (37).

8. Filtre pour liquide selon une des revendications précédentes,
**caractérisé en ce que**
la soupape à coulisse (17) possède une région de centrage (28) qui est insérée dans le corps de boîtier (11).

9. Filtre pour liquide selon la revendication 8,
**caractérisé en ce que**
la région de centrage (28) est insérée dans le corps de boîtier (11) de telle sorte que la soupape à coulisse (17) est retenue par une force de serrage lors du remplacement du filtre.

10. Filtre pour liquide selon une des revendications précédentes,
**caractérisé en ce que**
la soupape à coulisse (17) présente deux régions d'étanchéité (25, 26), le côté épuré (19) étant séparé par la première région d'étanchéité (25) et l'admission de liquide brut (22) par la deuxième région d'étanchéité (26) de l'évacuation de liquide (24).
